(19) Europäisches Patentamt
European Patent Office
Office européen des brevets

(11) Publication number: 0 024 131
B1

(12) # EUROPEAN PATENT SPECIFICATION

(45) Date of publication of patent specification: 21.03.84

(51) Int. Cl.$^3$: C 01 F 7/30

(21) Application number: 80302522.0

(22) Date of filing: 24.07.80

(54) A method of obtaining alumina from clay and other alumino-silicates and alumina obtained by this method.

(30) Priority: 27.07.79 ES 482881

(43) Date of publication of application:
25.02.81 Bulletin 81/8

(45) Publication of the grant of the patent:
21.03.84 Bulletin 84/12

(84) Designated Contracting States:
AT BE CH DE FR GB IT LI LU NL SE

(56) References cited:
BE - A - 567 784
DD - A - 99 350
GB - A - 1 547 420
US - A - 3 594 122

NEUE HÜTTE, Vol. 24, No. 2, Februar 1979 S. ZIEGENBALG "Tonderdegewinnung aus nichtbauxitischen Rohstoffen" pages 44 to 50

The file contains technical information submitted after the application was filed and not included in this specification

(73) Proprietor: Clavel, Emilia GarciaMaria
Zurbano 58
Madrid (ES)
(73) Proprietor: Lope, Jesus MartinezMaria
Torrelaguna, 125
Madrid (ES)
(73) Proprietor: Alvarez, Teresa CasaisMaria
Carlos Caamano, 10
Madrid (ES)

(72) Inventor: Clavel, Emilia GarciaMaria
Zurbano 58
Madrid (ES)
Inventor: Lope, Jesus MartinezMaria
Torrelaguna, 125
Madrid (ES)
Inventor: Alvarez, Teresa CasaisMaria
Carlos Caamano, 10
Madrid (ES)

(74) Representative: Pearce, Anthony Richmond et al,
Marks & Clerk Alpha Tower Suffolk Street
Queensway
Birmingham B1 1TT (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 024 131 B1

# A method of obtaining alumina from clay and other alumino-silicates and alumina obtained by this method

This invention relates to a method of obtaining alumina from clay and other alumina-silicates.

The world demand for aluminium grows constantly while the reserves of bauxite, the only mineral from which alumina (the raw material for obtaining aluminium) is currently extracted, are limited. The few countries of the world which product bauxite, such as Guinea, Jamaica, Australia and British Guiana, have an agreement similar to OPEC for controlling the commercialization of their product.

In the particular case of Spain, where there are no natural bauxite fields and only a limited domestic production of alumina, the importation of alumina and bauxite grows constantly as demonstrated by the following statistics:—

| 1970 | Tons imported |
|---|---|
| Aluminium minerals (bauxite, etc) | 93,212 |
| Alumina | 236,534 |
| Hydrated alumina | 8,972 |

| 1978 | Tons imported |
|---|---|
| Aluminium minerals (bauxite, etc) | 102,398 |
| Alumina | 419,910 |
| Hydrated alumina | 12,315 |

All non-producers of bauxite necessarily have the same problem. This situation encourages the search for new techniques of producing alumina from non-bauxite minerals, for example kaolin and other forms of clay of which the world reserves are inexhaustible.

To date, a variety of methods of producing alumina using clays as raw materials have been proposed but, in general they have not been industrially applied, because they are uneconomic. On the other hand, given the abundance and the relative cheapness of the kaolin, the possibility of new applications for kaolin is being investigated constantly. For example, Spain has numerous and varied fields of kaolin, dispersed over a large part of the country, mainly in the northwest zone, Galicia-Asturias, and in the central-oriental zone, Valencia-Teruel-Cuenca. However, although about 490 concessions have been given, covering more than 53,000 ha., only about 170 have been effectively exploited and there are only about 65 treatment installations, almost exclusively in Galicia. If Spanish kaolin is so poorly exploited it is only because kaolin is employed in relatively few industries, for example for producing ceramics and paper. The mining of kaolin in Spain could increase rapidly if the demand were greater.

US—A—3 594 122 discloses a method of extracting alumina from ores such as clay (low grade alumina; if the ore is of very high grade, it must be mixed with inert materials) wherein the clay is mixed with ammonium sulphate and then pelletized (a drum pelleter is indispensable). The pellets are heated in a kiln to about 600—650°C to produce aluminium sulphate. After heating, the pellets are cooled and placed in water for a time sufficient to dissolve all of the aluminium sulphate present. The resultant solution is filtered and reacted with ammonia to form a precipitate of aluminium hydroxide which is filtered, washed and calcined to produce alumina. However, such a process requires the use of a relatively high kiln temperature to produce the required aluminium sulphate. Also, the aluminium sulphate is soluble in water only with difficulty.

It is an object of the present invention to obviate or mitigate these disadvantages.

According to the present invention, there is provided a method of obtaining alumina from clay or other alumino-silicate comprising the steps of reacting the clay or other alumino-silicate in the dry state at an elevated temperature with a salt so as to produce a soluble aluminium salt, separating the salt by dissolution, and thereafter precipitating the aluminium as aluminium hydroxide, characterized in that the reaction is effected with a salt of an alkali metal or ammonia to produce a double salt of aluminium-alkali metal or aluminium-ammonium, said reaction being carried out for a time of between 45 and 120 minutes and at a temperature of 300—750°C and in that the double salt is dissolved to effect said separating.

The clay is preferably kaolin and the salt employed in the method of the invention is preferably a sulphate, bisulphate, pyrosulphate, thiosulphate, sulphite, phosphate or phosphite.

A double salt of aluminium and the alkali metal or ammonia is obtained as a result of the calcination, together with silica, unreacted alumina-silicate and an amount of impurity dependent on the starting materials employed.

The double salt of aluminium is separated from the other components by dissolution in water or alkali, in the latter case the aluminium dissolving as an alkali aluminate. The purity of the alumina end product depends on the solvent employed for the separation, with the purity of the alumina being higher when alkalis are employed as solvents.

Subsequently, the aluminium is precipitated as the hydroxide from the solutions of the double salt of aluminium or alkali aluminate by any known method, and the aluminium hydroxide obtained is calcined to produce alumina, in any of its crystalline forms, according to the temperature of calcination.

From the foregoing description, it will be

seen that the method of the invention serves to obtain alumina by a dry method (with its evident advantages of equipment and manipulation) in that the starting mixture and the reaction product are both solids. The reaction allows the alumina to be obtained with a major or minor degree of purity according to the extracting solution employed, i.e. alkaline or simply aqueous. The choice of one or other extracting solution will depend on the intended use of the alumina.

The alumina-silicate raw material does not need any treatment prior to the reaction. In the case of kaolin, it is enough to remove any excess sand by washing. Grinding is also unnecessary, because the particle size is not critical.

The alkaline or ammonium salt reagent, also in solid form, is mixed with the raw material mechanically, without previous grinding, since again the particle size is not critical.

The reaction is practically stoichiometric, so that it is unnecessary to operate with excess of reagent.

The reaction temperature is relatively low and, the reaction time is short.

The solubilization of the aluminium extracted in the reaction is carried out at room temperature and normal pressure, so that the installations necessary for the solubilization do not present any complexity.

The precipitation of the solubilized aluminium may be carried out in different ways, all simple and employing relatively small amounts of reagent which is cheap and recoverable quantitatively.

The efficiency of the reaction is about 70—80% expressed as alumina obtained/alumina contained in the clay.

Finally, the insoluble residue of the dry method reaction, that is silica, a little clay, and in some cases calcium carbonate, can be used for the fabrication of cement, thereby improving the economy of the process.

The invention will now be more particularly described with reference to the following Example.

Example

Kaolin, which has previously been washed, is mixed mechanically, in the dry state, with sodium or potassium bisulphate, to provide a solid and homogeneous mixture. This mixture is calcined in an oven at a temperature between 300 and 750°C, for a period of time between 45 and 120 minutes. The calcination will produce in the solid mixture the following reaction:

$$Al_2O_3 \cdot 2SiO_2 \cdot 2H_2O + 6NaHSO_4 \cdot H_2O(6KHSO_4) \rightarrow 2Na_3Al(SO_4)_3(6K_3Al(SO_4)_3) + 2SiO_2$$

Thus, two new compounds are produced; silica and sodium-aluminium sulphate (or potassium-aluminium sulphate).

The sodium-aluminium sulphate (or potassium-aluminium sulphate) is soluble both in water and in an acid or basic medium (with or without raising the temperature of the solvent). Thus it is sufficient to dissolve the product of the reaction in any of these solvents in order to separate by filtration, as an insoluble residue, practically all the silica produced in the reaction together with any unreacted kaolin, the entire aluminium content together with small quantities of impurities (silicon, iron and titanium) being contained in the filtrate. Thereafter, the aluminium in the filtrate is precipitated as hydrated alumina. The purity of the hydrated alumina varies according to the solvent employed to dissolve the reaction produced.

We shall now describe in detail the process of solubilization and precipitation of the aluminium with two different solvents; and aqueous medium and a basic medium.

a) Solubilization in aqueous medium

Treating the product of the calcination reaction produces a solution containing aluminium ions, in which there are also sulphate ions, sodium (or potassium) ions, and impurities of silica, iron and titanium. Adding to this aqueous solution, sufficient of an alkali (sodium potassium or ammonium hydroxide or carbonate), precipitates the aluminium is as the hydroxide. As is well known, on calcination the aluminium hydroxide is transformed to alumina, in one of its crystalline forms according to the calcination temperature employed. If this temperature is about 1200°C, $\alpha$-alumina is obtained.

Thus the hydrated alumina, precipitated according to the above sequence is separated from the solution by filtration, whereafter it is washed and calcined at 1200°C to obtain $\alpha$-alumina. This alumia is sufficiently pour ($Si<0.05\%$, $Ti<0.1\%$ and Fe 1—2%, the percentages being expressed as oxides of the elements) to allow it to be used for many purposes without pre-treatment. By way of example, the following lists indicate the compositions of two kaolins and two aluminas extracted from them.

Kaolin A

| Composition | |
|---|---|
| $SiO_2$ | 55,10% |
| $Al_2O_3$ | 28,60% |
| $Fe_2O_3$ | 1,43% |
| $TiO_2$ | 0,19% |
| CaO | 0,77% |
| MgO | 0,30% |
| $Na_2O$ | 0,55% |
| $K_2O$ | 3,53% |
| Calcination loss | 8,70% |

$\alpha$-Alumina obtained

| Composition | |
|---|---|
| $Al_2O_3$ | 97,70% |
| $Fe_2O_3$ | 2,20% |
| $SiO_2$ | 0,04% |
| $TiO_2$ | 0,10% |

Kaolin B

Composition

| | |
|---|---|
| $SiO_2$ | 56,19% |
| $Al_2O_3$ | 31,06% |
| $Fe_2O_3$ | 0,50% |
| $TiO_2$ | traces |
| CaO | 0,31% |
| MgO | 0,09% |
| $Na_2O$ | 0,12% |
| $K_2O$ | 0,62% |
| Calcination loss | 10,96% |

$\alpha$-Alumina obtained

Composition

| | |
|---|---|
| $Al_2O_3$ | 98,85% |
| $Fe_2O_3$ | 1,07% |
| $SiO_2$ | 0,05% |
| $TiO_2$ | 0,03% |

It will be apparent that the composition of the mother liquor remaining after separation of the aluminium hydroxide will vary according to whether precipitation of the aluminium hydroxide is carried out with an alkali hydroxide or with the carbonate. If the precipitation is carried out with an alkali hydroxide, the mother liquor, after the filtration of the aluminium hydroxide, is a pure solution of sodium sulphate, potassium sulphate or a mixture of ammonium and potassium sulphates according to the precipitating alkali employed. By evaporation of said solutions, crystals of the mentioned sulphates are obtained, which will be employed for obtaining new amounts of reagent (sodium or potassium bisulphate), or as fertilizers.

If the precipitation of the aluminium hydroxide is carried out with sodium or potassium carbonate, in the mother liquor, besides sodium and sulphate ions or potassium and sulphate ions, carbonate ions will also be present. In this case, sulphuric acid may be added to the mother liquor before concentration, which will release carbon dioxide and allows direct crystallization of sodium bisulphate or potassium bisulphate. Again, therefore, the reagent consumed in the initial reaction to extract alumina from kaolin is recuperated practically.

b) Solubilization in alkaline medium

If the sodium-aluminium sulphate or potassium-aluminium sulphate ($AlNa_3(SO_4)_3$ or $AlK_3(SO_4)_3$) product of the calcination reaction, is dissolved in sodium or potassium hydroxide, so that the whole of the aluminium goes into solution as sodium or potassium aluminate, then with the insoluble silica are separated the entire amount of the iron and titanium.

Instead of sodium and potassium hydroxide, the respective carbonate with lime may be employed. Adding lime to an alkaline carbonate solution results in the following reaction:

$$Na_2CO_3+H_2O+CaO \rightarrow 2NaOH+CaCO_3$$

thereby releasing the amount of hydroxide necessary for the formation of the aluminate. In this case the insoluble residue, which remains after the aluminate solution is separated, contains calcium carbonate as well as the silica and the iron and titanium hydroxide.

Precipitation of aluminium hydroxide from the aluminate solution may be carried out according to one of the three following variants to produce a very pure aluminium hydroxide suitable for use (after its calcination and transformation into $\alpha$-alumina) in the manufacture of aluminium by electrolysis:—

1st variant

The aluminate solution is acidified with sulphuric acid:

$$2NaAlO_2+H_2SO_4+2H_2O \rightarrow 2Al(OH)_3+Na_2SO_4$$

2nd variant

The aluminate solution is diluted with water to effect the following hydrolysis reaction:

$$NaAlO_2+2H_2O \rightarrow Al(OH)_3+NaOH$$

3rd variant

Carbon dioxide is passed through the solution to effect the following reaction:

$$2NaAl(OH)_4+CO_2 \rightarrow 2Al(OH)_3+Na_2CO_3+H_2O$$

In any case, the precipitation velocity must be controlled for obtaining particles of great size.

The precipitate of aluminium hydroxide (more correctly hydrated alumina) is separated by filtration, washed and calcined to eliminate the hydration water and to transform it to the non-hygroscopic form, $\alpha$-alumina.

The composition of the alumina, obtained with this alkaline treatment of the reacted solid products, is as follows for both the kaolins A and B mentioned above:—

$\alpha$-Alumina

Composition

| | |
|---|---|
| $Al_2O_3$ | 99,96% |
| $SiO_2$ | 0,03% |
| $Fe_2O_3$ | 0,008% |
| $TiO_2$ | 0,001% |

The degree of purity of this alumina is of the order usually employed for aluminium production by electrolysis.

Their real and apparent density are of the order of the densities of the mentioned aluminas.

The mother liquors resulting from the separation by filtration of the precipitate of hydrated alumina are solutions, which according to the variant concerned, contain respectively the following ions:

1st variant

Sulphate, sodium (or potassium) and hydrogen ions. The subsequent evaporation of the solution will provide very pure sodium bisulphate (or potassium bisulphate), suitable for use in the reaction for producing alumina from clays, kaolin, or other alumina-silicate raw materials.

2nd variant

Sulphate and sodium (or potassium) ions. In this case, before evaporation, it is necessary to add to the mother liquor a defined amount of acid to obtain, as in the preceding case, pure crystals of (sodium or potassium bisulphate.

3rd variant

Besides sodium (or potassium) bisulphate, the mother liquor contains the respective carbonate. The subsequent addition of sulphuric acid followed by evaporation of the solution will cause the release of carbon dioxide and the direct crystallization of sodium (or potassium) bisulphate. The recuperation of the bisulphate is, practically total, as in the previous cases, and the carbon dioxide released may be employed for passage through additional aluminate solutions.

**Claims**

1. A method of obtaining alumina from clay or other alumino-silicate comprising the steps of reacting the clay or other alumino-silicate in the dry state at an elevated temperature with a salt so as to produce a soluble aluminium salt, separating the salt by dissolution, and thereafter precipitating the aluminium as aluminium hydroxide, characterized in that the reaction is effected with a salt of an alkali metal or ammonia to produce a double salt of aluminium-alkali metal or aluminium-ammonium, said reaction being carried out for a time of between 45 and 120 minutes and at a temperature of 300—750°C and in that the double salt is dissolved to effect said separating.

2. A method as claimed in Claim 1, wherein the clay is kaolin.

3. A method as claimed in Claim 1, or Claim 2, wherein the alkali or ammonium salt is a sulphate, bisulphate, pyrosulphate, thiosulphate, sulphite, phosphate or phosphite.

4. A method as claimed in any preceding Claim, wherein the salt is sodium or potassium bisulphate.

5. A method as claimed in any preceding Claim, wherein the product resulting from the calcination of the clay or other alumina-silicate with the salt is dissolved in water to separate the double salt of aluminium-alkali or ammonium.

6. A method as claimed in one of Claims 1 to 4, wherein the product resulting from the calcination of the clay or other alumino-silicate with the salt is dissolved in alkali to separate the aluminium as alkaline aluminate in solution.

7. A method as claimed in any preceding Claim, wherein the salt employed is recuperated substantially quantitatively.

**Patentansprüche**

1. Methode zur Gewinnung von Aluminiumoxyd aus Lehm oder einem anderen Aluminosilikat, die darin besteht, Lehm oder ein anderes Aluminosilikat in trockenem Zustand mit einem Salz reagieren zu lassen, so das ein lösliches Aluminiumsalz entsteht, das Salz durch Lösung abzutrennen und das Aluminium in Form von Alumiumhydroxyd auszufällen, dadurch gekennzeichnet, dass die Reaktion mit einem Alkalimetallsalz oder mit Ammoniak durchgeführt wird, um ein Aluminium-Ammonium-Doppelsalz oder ein Aluminium-Alkalimetall-Doppelsalz zu gewinnen, wobei besagte Reaktion bei einer Temperatur zwischen 300 und 450°C während 45—120 Minuten durchgeführt wird, und dadurch, dass das Doppelsalz zur Durchführung der besagten Trennung gelöst wird.

2. Methode gemäss Anspruch 1, bei der der Lehm Kaolin ist.

3. Methode gemäss Anspruch 1 oder 2, bei der das Alkali- oder Ammoniumsalz ein Sulfat, Bisulfat, Pyrosulfat, Thiosulfat, Sulfit, Phosphat oder Phosphit ist.

4. Methode gemäss einem der vorhergehenden Ansprüche, bei der das Salz Natriumbisulfat oder Kaliumbisulfat ist.

5. Methode gemäss einem der vorhergehenden Ansprüche, bei der das Produkt der Veraschung des Lahms oder eins anderen Aluminosilikats mit dem Salz in Wasser gelöst wird, um das Alkalimetall-Aluminium-Doppelsalz oder das Aluminium-Ammonium-Doppelsalz abzutrennen.

6. Method nach einem der Ansprüche 1—4, bei der das Produkt der Veraschung des Lehms oder eines anderen Aluminosilikates mit dem Salz in einem Alkali gelöst wird, damit das Aluminium in Form von gelöstem alkalischen Aluminat abgetrennt wird.

7. Methode nach einem der vorhergehenden Ansprüche, bei der das verwendete Salz praktisch vollkommen wiedergewonnen wird.

**Revendications**

1. Une méthode d'obtention de l'alumine à partir de l'argile ou d'un autre silicate d'aluminium, qui comprend les étapes suivantes: on soumet l'argile ou un autre silicate d'aluminium à une réaction à l'état solide et à haute température avec un sel de manière à produire un sel d'aluminium soluble, on sépare le sel par dissolution, et ensuite on précipite l'aluminium sous forme d'hydroxyde d'aluminium, le procédé étant caracterisé par le fait que la réaction s'opère avec un sel de métal alcalin ou d'ammonium, afin de produire un sel double

d'aluminium - alcali ou d'aluminium - ammonium, la dite réaction s'effectuant en un temps entre 45 et 120 minutes et à une température de 300—750°C, le sel souble étant dissout pour effectuer la dite séparation.

2. Une méthode conforme à la revendication 1, et dans laquelle l'argile est du kaolin.

3. Une méthode conforme à la revendication 1, ou la revendication 2, et dans laquelle le sel alcalin ou d'ammonium est un sulfate, bisulfate, pyrosulfate, thiosulfate, sulfite, phosphate ou phosphiite.

4. Une méthode conforme à n'importe laquelle des revendications précédentes et dans laquelle le sel est du bisulfate de sodium ou de potassium.

5. Une méthode conforme à n'importe laquelle des revendications précédentes et dans laquelle le produit de la calcination de l'argile ou d'un autre silicate d'aluminium avec le sel est dissout dans de l'eau pour séparer le sel double aluminium-alcali ou aluminium-ammonium.

6. Une méthode conforme à une des revendications 1 à 4 et dans laquelle les produit de la calcination de l'argile ou d'un autre silicate d'aluminium avec le sel est dissout dans de l'alcali pour séparer dans la solution l'aluminium sous forme d'aluminate alcalin.

7. Une méthode conforme à n'importe laquelle des revendications précédentes et dans laquelle le sel employé est récupéré de façon pratiquement quantitative.